# EUROPÄISCHE PATENTSCHRIFT

(11) **EP 1 558 475 B1**
(45) Veröffentlichungstag und Bekanntmachung des Hinweises auf die Patenterteilung: **01.02.2006**
(21) Anmeldenummer: 04728542.4
(22) Anmeldetag: 21.04.2004
(51) Int. Cl.: B60R 25/02

(54) **VORRICHTUNG ZUM SPERREN DER LENKSPINDEL EINES KRAFTFAHRZEUGS**
BLOCKING DEVICE FOR A MOTOR VEHICLE STEERING SHAFT
DISPOSITIF POUR VERROUILLER LA COLONNE DE DIRECTION D'UN VEHICULE A MOTEUR

(30) Priorität: 06.05.2003 DE 10320155
(43) Veröffentlichungstag der Anmeldung: 03.08.2005
(73) Patentinhaber: Huf Hülsbeck & Fürst GmbH & Co. KG, 42551 Velbert (DE)
(72) Erfinder: LIMBURG, Hans-Joachim, 85247 Schwabhausen (DE); ZILLMANN, Horst, 81243 München (DE)
(74) Vertreter: Oedekoven, Wolf Dieter
(86) Internationale Anmeldenummer: PCT/EP2004/004218
(87) Internationale Veröffentlichungsnummer: WO 2004/098959

(56) Entgegenhaltungen:
- WO-A-02/090152
- DE-A- 19 929 435
- US-A- 4 643 009

## Beschreibung

Die Erfindung betrifft eine Vorrichtung zum Sperren der Lenkspindel eines Kraftfahrzeugs gegen Drehen mittels eines mit Sperrausnehmungen der Lenkspindel zusammenwirkenden Sperrbolzens, welcher mit Hilfe eines durch einen Elektromotor hin- und herdrehbaren und mit einem Drehstellungsdetektor zusammenwirkenden Steuergliedes zwischen einer Sperrstellung und einer Freigabestellung hin- und herschiebbar ist.

Solche Vorrichtungen zur Verriegelung der Lenkspindel eines Kraftfahrzeugs, so daß sie nicht mehr gedreht werden kann, sind in unterschiedlichen Ausgestaltungen bekannt.

Bei einer derartigen bekannten Vorrichtung zum Sperren der Lenkspindel eines Kraftfahrzeugs gegen Drehen weist das Steuerglied einen Exzenter auf, um mit dem durch eine Schraubendruckfeder in die Lenkspindel-Sperrstellung belasteten Sperrbolzen zusammenzuwirken, und das Steuerglied ist mit dem Ausgangszahnrad eines dem Elektromotor nachgeordneten Untersetzungsgetriebes drehfest verbunden. Die beiden Drehstellungen des Steuergliedes, welche jeweils der Lenkspindel-Sperrstellung bzw. der Lenkspindel-Freigabestellung des Sperrbolzens zugeordnet sind, werden mit Hilfe zweier berührungsloser Schalter oder zweier Mikroschalter festgestellt, mit denen das Ausgangszahnrad des Untersetzungsgetriebes zusammenwirkt und die zu einer elektronischen Steuerschaltung gehören, mit welcher der Elektromotor, eine bei nicht ordnungsgemäßer Bewegung des Sperrbolzens aus der Sperrstellung in die Freigabestellung wirksam werdende Alarmeinrichtung und die Zündung sowie der Anlasser des Kraffahrzeugsmotors gesteuert werden (USA-4643009).

Bei einer anderen bekannten Vorrichtung zum Sperren der Lenkspindel eines Kraftfahrzeuges gegen Drehen der in Rede stehenden Art weist das Steuerglied eine schraubenlinienförmige verlaufende äußere Hubkurve zur Bewegung des Sperrbolzens auf, der sich parallel zur Drehachse des Steuergliedes erstreckt Weiterhin weist das, Steuerglied hinter dem der Lenkspindel abgewandten Ende des Sperrbolzens eine Umfangsverzahnung auf, in welche eine auf der Ausgangswelle des Elektromotors sitzende Schnecke eingreift. Neben der Umfangsverzahnung auf deren der Hubkurve und dem Sperrbolzen zugewandter Seite wirkt das Steuerglied mit einem elektrischen Endschalter zusammen, um das Steuerglied nach einer Umdrehung anzuhalten (DE-A-100 22 830).

Bei zwei weiteren bekannten Vorrichtungen zum Sperren der Lenkspindel eines Kraftfahrzeugs gegen Drehen der eingangs angegebenen Gattung ist das Steuerglied mit einer schrauberilinienförmig verlaufenden inneren bzw. äußeren Hubkurve zur Bewegung des koaxial bzw. parallel zur Drehachse des Steuergliedes angeordneten Sperrbolzens und mit einer Umfangsverzahnung versehen, in welche eine auf der Ausgangswelle des Elektromotors sitzende Schnecke bzw. das Ausgangszahnrad eines dem Elektromotor nachgeordneten Stirnradgetriebes eingreift. Bei der einen Vorrichtung sind zwischen der Umfangsverzahnung und dem anderen Ende des Steuergliedes um die Drehachse des Steuergliedes herum elektrische Endschalter zur Detektierung verschiedener Drehstellungen des Steuergliedes verteilt, welche mittels entsprechender Nocken am Steuerglied betätigt werden. Bei der anderen Vorrichtung sind zwischen der Umfangsverzahnung und der äußeren Hubkurve des Steuergliedes um die Drehachse des Steuergliedes herum elektrische Schaltelemente (Schnapp- und / oder Mikroschalter) zur Detektierung verschiedener Drehstellungen des Steuergliedes verteilt, welche mittels entsprechender Nocken am Steuerglied betätigt werden, und ist ein elektrisches Schaltelement (Schnapp- und / oder Mikroschalter) zur Detektierung der Lenkspindel-Freigabestellung des Sperrbolzens vorgesehen, welches mittels eines vom Steuerglied bewegten Sicherungselementes für den in der Freigabestellung befindlichen Sperrbolzen betätigt wird (DE-A-101 33 408).

Bekannt sind auch zahlreiche Vorrichtungen zum Sperren der Lenkspindel eines Kraftfahrzeugs gegen Drehen mittels eines mit Sperrausnehmungen der Lenkspindel zusammenwirkenden Sperrbolzens, welcher mit Hilfe eines durch einen Elektromotor hin- und herdrehbaren Steuergliedes zwischen einer Sperrstellung und einer Freigabestellung hin- und herschiebbar ist und mit einem oder mehreren Detektoren zur Feststellung der Sperrbolzenstellung zusammenwirkt. Es können drei berührungslos arbeitende Schalter (Magnetfeldsensoren, insbesondere Hallsensoren, oder optische Sensoren) zur Feststellung der Freigabestellung bzw. der Sperrstellung bzw. einer Vorsperrstellung des Sperrbolzens (DE-C-198 09 295) oder ein Hallsensor zur Feststellung der Freigabestellung des Sperrbolzens (DE-C-199 06 267, DE-C-199 24 835) oder zwei Hallsensoren zur Feststellung der Freigabestellung bzw. der Sperrstellung und der Freigabestellung des Sperrbolzens (DE-C-199 29 435) oder ein elektrischer Schalter zur Feststellung der Freigabestellung des Sperrbolzens (DE-C-101 09 609, DE-C-101 21 714) vorgesehen sein.

Der Erfindung liegt die Aufgabe zugrunde, eine Vorrichtung der eingangs angegeben Art zu schaffen, welche eine sichere Feststellung der Lenkspindel-Freigabestellung des Sperrbolzens gewährleistet und eine schonende sowie genaue Betätigung des Drehstellungsdetektors ermöglicht, ebenso wie eine gedrungene Bauweise mit entsprechend geringem Platzbedarf.

Diese Aufgabe ist bei einer gattungsgemäßen Vorrichtung erfindungsgemäß durch die im kennzeichnenden Teil des Patentanspruchs 1 aufgeführten Merkmale gelöst. Vorteilhafte Ausgestaltungen der Vorrichtung nach der Erfindung sind in den restlichen Patentansprüchen angegeben.

Nachstehend ist eine bevorzugte Ausführungsform der erfindungsgemäßen Vorrichtung zum Sperren der Lenkspindel eines Kraftfahrzeugs gegen Drehen anhand von Zeichnungen beispielsweise beschrieben. Darin zeigt:
Fig. 1 den Längsschnitt entlang der Linie I-I in Fig. 2, wobei der Sperrbolzen sich in seiner Sperrstellung befindet;
Fig. 2 die Ansicht in Richtung des Pfeils II in Fig. 1 ohne Gehäuse, Gehäusedeckel sowie Leiterplatte und ohne Lenkspindel;
Fig. 3 die Ansicht in Richtung des Pfeils III in Fig. 1 ohne Gehäusedeckel und Leiterplatte, aber mit Mantelrohr;
Fig. 4 den Längsschnitt entlang der Linie IV-IV in Fig. 5, wobei der Sperrbolzen sich in seiner Freigabestellung befindet;
Fig. 5 die Ansicht in Richtung des Pfeils V in Fig. 4 ohne Gehäuse, Gehäusedeckel sowie Leiterplatte und ohne Lenkspindel;
Fig. 6 die Ansicht in Richtung des Pfeils VI in Fig. 4 ohne Gehäusedeckel und Leiterplatte, aber mit Mantelrohr;
Fig. 7 den Längsschnitt entlang der Linie VII VII in Fig. 8, wobei der Sperrbolzen sich in einer Vorsperrstellung befindet;
Fig. 8 die Ansicht in Richtung des Pfeils VIII in Fig. 7 ohne Gehäuse, Gehäusedeckel sowie Leiterplatte und ohne Lenkspindel;
Fig. 9 die Ansicht in Richtung des Pfeils IX in Fig. 7 ohne Gehäusedeckel und Leiterplatte, aber mit Mantelrohr;
Fig. 10 die Ansicht in Richtung des Pfeils VI in Fig. 4 ohne Gehäuse, Gehäusedeckel sowie Leiterplatte und ohne Lenkspindel, und zwar in perspektivischer Darstellung;
Fig. 11 eine perspektivische Ansicht der mit einer Spiralnut versehenen Seite des Steuergliedes;
Fig. 12 eine-perspektivische Ansicht der mit einer Spiralrippe versehenen Seite des Steuergliedes.

Die dargestellte Vorrichtung zum Sperren der Lenkspindel 1 eines Kraftfahrzeugs gegen. Drehen weist einen einteiligen Sperrbolzen 2 auf, welcher mit nutenförmigen Sperrausnehmungen 3 einer auf der Lenkspindel 1 befestigten Sperrhülse 4 zusammenwirkt. Die Lenkspindel 1 und die Sperrhülse 4 sind von einem Mantelrohr 5 mit einer Durchgangsöffnung für den Sperrbolzen 2 umschlossen.

Der Sperrbolzen 2 weist einen rechteckigen Querschnitt auf und ist in einem Kanal 6 entsprechenden Querschnitts eines Gehäuses 7 axial verschieblich gelagert. Die beiden breiteren Seitenflächen 8, 9 des Kanals 6 erstrecken sich jeweils in einer zur gemeinsamen Längsachse 10 der Lenkspindel 1 und des dazu koaxialen Mantelrohres 5 senkrechten Ebene. Das Gehäuse 7 ist auf der dem Kanal 6 fernen Seite mit einer durch einen Deckel 11 verschlossenen Montageöffnung 12 versehen und am Mantelrohr 5 befestigt.

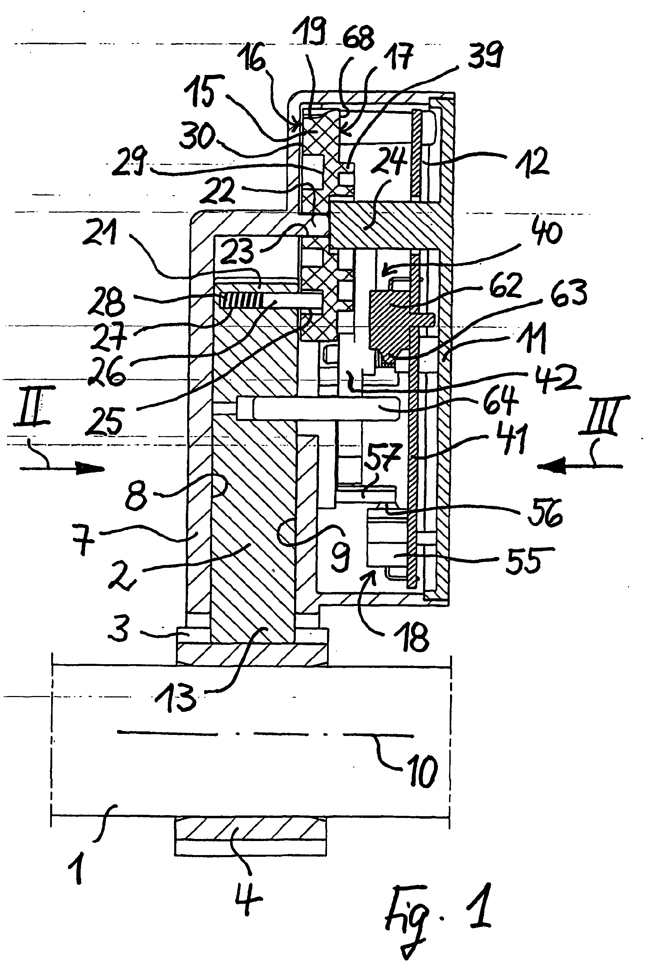

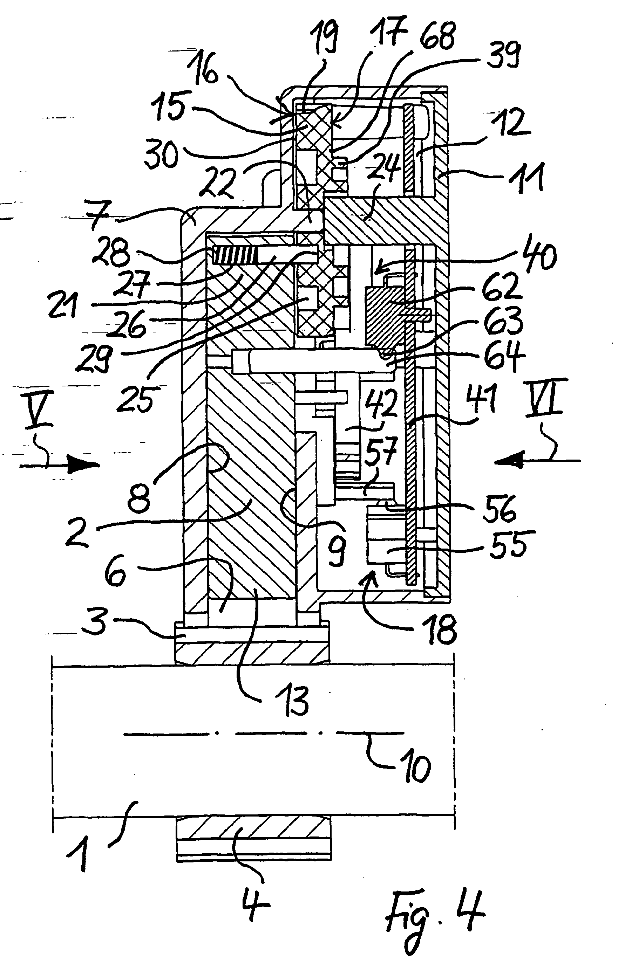

Der Sperrbolzen 2 ist zwischen der aus Fig. 1, 2, 3 ersichtlichen Sperrstellung, in welcher er mit seinem der Lenkspindel 1 zugewandten Ende 13 in eine Sperrausnehmung 3 der Sperrhülse 4 eingreift, so daß die Lenkspindel 1 nicht mehr gedreht werden kann, und der aus Fig. 4, 5, 6 ersichtlichen Freigabestellung hin- und herbewegbar, in welcher der Sperrbolzen 2 mit dem Ende 13 in keine Sperrausnehmung 3 der Sperrhülse 4 eingreift und die Lenkspindel 1 freigibt, so daß sie gedreht werden kann.

Zur Axialverschiebung des Sperrbolzens 2 in die Freigabestellung und in der entgegengesetzten Richtung in die Sperrstellung dient ein mittels eines Elektromotors 14 mit umkehrbarer Drehrichtung hin- und herdrehbares Steuerglied 15, welches als kreisrunde Scheibe ausgebildet ist, die auf der einen Seite 16 mit dem Sperrbolzen 2 und auf der anderen Seite 17 mit einem Drehstellungsdetektor 18 zusammenwirkt und eine Umfangsverzahnung 19 aufweist, in die eine vom Elektromotor 14 angetriebene Schnecke 20 eingreift.

Das Steuerglied 15 ist auf der dem Gehäusedeckel 11 zugewandten Seite des Sperrbolzens 2 neben dem der Lenkspindel 1 fernen Ende 21 des Sperrbolzens 2 angeordnet und im Gehäuse 7 auf einem zylindrischen Vorsprung 22 des Gehäuses 7 drehbar gelagert, welcher in eine mittige Lagerbohrung 23 des Steuergliedes 15 eingreift und sich senkrecht zu den beiden breiteren Seitenflächen 8, 9 des den Sperrbolzen 2 führenden Kanals 6 des Gehäuses 7 erstreckt. Auf dem zylindrischen Vorsprung 22 kleineren Durchmessers ist das Steuerglied 15 durch einen zylindrischen Vorsprung 24 größeren Durchmessers des Gehäusedeckels 11 axial fixiert.

Auf der dem Sperrbolzen 2 benachbarten Seite 16 ist das Steuerglied 15 mit einer Spiralnut 25 versehen, welche sich um die Lagerbohrung 23 des Steuergliedes 15 herumwindet und in welche ein vom Sperrbolzen 2 seitlich abstehender Stift 26 eingreift, so daß der Sperrbolzen 2 beim Drehen des Steuergliedes 15 in der einen oder in der anderen Richtung radial zu der vom Gehäusevorsprung 22 definierten Drehachse des Steuergliedes 15 in der einen bzw. in der anderen Richtung axial verschoben wird.

Der zylindrische Stift 26 ist in einer im lenkspindelfernen Ende 21 des Sperrbolzens 2 vorgesehenen zylindrischen Bohrung 27 axial verschieblich gelagert und durch eine in der Bohrung 27 angeordnete Schraubendruckfeder 28 in Richtung auf das Steuerglied 15 belastet. Das Steuerglied 15 weist eine mit dem Stift 26 so, wie weiter unten beschrieben, zusammenwirkende, vom Boden 29 der Spiralnut 25 zu der dem Sperrbolzen 2 zugewandten ebenen Oberfläche 30 des Steuergliedes 15 ansteigende Schrägfläche 31 auf, welche sich an der Spiralnut 25 entlang erstreckt und an einer weiter unten erläuterten Stelle 32 des Bodens 29 der Spiralnut 25 beginnt. Der Sperrbolzen 2 ist durch eine Schraubendruckfeder 33 in Richtung auf die Lenkspindel 1 belastet, welche sich einerseits an einer Schulter 34 des Sperrbolzens 2 und andererseits an einer Schulter 35 des Gehäuses 7 abstützt.

Die in die Umfangsverzahnung 19 des Steuergliedes 15 eingreifende Schnecke 20 ist auf der Ausgangswelle 36 des Elektromotors 14 befestigt. Der Elektromotor 14 ist im Gehäuse 7 neben dem Sperrbolzen 2 angeordnet, so daß seine Ausgangswelle 36 sich parallel zu den beiden schmaleren Seitenflächen 37, 38 des Sperrbolzens 2 erstreckt.

Auf der dem Sperrbolzen 2 abgewandten Seite 17 ist das Steuerglied 15 mit einer vorstehenden Spiralrippe 39 versehen, welche sich um die Lagerbohrung 23 des Steuergliedes 15 herumwindet und mit dem Drehstellungsdetektor 18 zusammenwirkt, um die der Freigabestellung des Sperrbolzens. 2 entsprechende Drehstellung des Steuergliedes 15 und die der-Sperrstellung des Sperrbolzens 2 entsprechende Drehstellung des Steuergliedes 15 festzustellen. Es ist ein weiterer Detektor 40 vorgesehen, mit welchem der Sperrbolzen 2 zur Feststellung seiner Freigabestellung zusammenwirkt. Der Drehstellungsdetektor 18 ist an einer im Gehäuse 7 befestigten, zum Gehäusedeckel 11 parallelen Leiterplatte 41 angeordnet, ebenso wie der weitere Detektor 40.

Die Spiralrippe 39 des Steuergliedes 15 wirkt über einen zweiarmigen Schwenkhebel 42 mit dem Drehstellungsdetektor 18 zusammen. Der Schwenkhebel 42 ist im Gehäuse 7 um eine zum Gehäusevorsprung 22 parallele Achse 43 schwenkbar gelagert, weist an seinem dem Steuerglied 15 benachbarten Ende 44 einen zur Schwenkachse 43 parallelen Vorsprung 45 auf, mit welchem die Spiralrippe 39 des Steuergliedes 15 zusammenwirkt, und ist durch eine Schraubendrehfeder 46 belastet, so daß der Vorsprung 45 an der Spiralrippe 39 anliegt. Die Schraubendrehfeder 46 ist auf der Schwenkachse 43 des Schwenkhebels 42 angeordnet und stützt sich mit einem Schenkel 47 am Schwenkhebel 42 und mit dem anderen Schenkel 48 an einem Vorsprung 49 des Gehäuses 7 ab.

Die Spiralrippe 39 des Steuergliedes 15 erstreckt sich über einen Drehwinkel des Steuergliedes 15 von über 360° und weist drei kreisbogenförmige, zur Lagerbohrung 23 des Steuergliedes 15 konzentrische Abschnitte 50, 51, 52 mit unterschiedlichen Krümmungsradien sowie zwei im wesentlichen gerade Abschnitte 53, 54 auf. Die beiden geraden Abschnitte 53, 54 dienen zum Verschwenken des Schwenkhebels 42. Der eine gerade Abschnitt 53 verbindet den kreisbogenförmigen Abschnitt 50, welcher den kleinsten Krümmungsradius aufweist, mit dem kreisbogenförmigen Abschnitt 51, welcher den mittleren Krümmungsradius aufweist. Der andere gerade Abschnitt 54 verbindet den kreisbogenförmigen Abschnitt 51, welcher den mittleren Krümmungsradius aufweist, mit dem kreisbogenförmigen Abschnitt 52, welcher den größten Krümmungsradius aufweist.

Der Drehstellungsdetektor 18 ist von einem elektrischen Tastschalter 55 mit einem Betätigungselement 56 gebildet. Mit dem Betätigungselement 56 wirkt der Schwenkhebel 42 über einen L-förmigen Schieber 57 zusammen, welcher in einer U-förmigen Führung 58 am Gehäuse 7 in derselben Richtung beweglich ist, wie das Betätigungselement 56 des Tastschalters 55. Der Schieber 57 ist mit einem zur Schwenkachse 43 des Schwenkhebels 42 parallelen zylindrischen Vorsprung 59 versehen, welcher in einen Querschlitz 60 in Form eines auf dem Kopf stehenden, flachen V eingreift, der in dem der Spiralrippe 39 des Steuergliedes 15 fernen Ende 61 des Schwenkhebels 42 ausgebildet ist.

Auch der weltere Detektor 40 ist von einem elektrischen Tastschalter 62 mit einem Betätigungselement 63 gebildet. Das Betätigungselement 63 ist in derselben Richtung beweglich, wie der Sperrbolzen 2. Mit dem Betätigungselement 63 wirkt ein stiftförmiger seitlicher Vorsprung 64 des Sperrbolzens 2 zusammen.

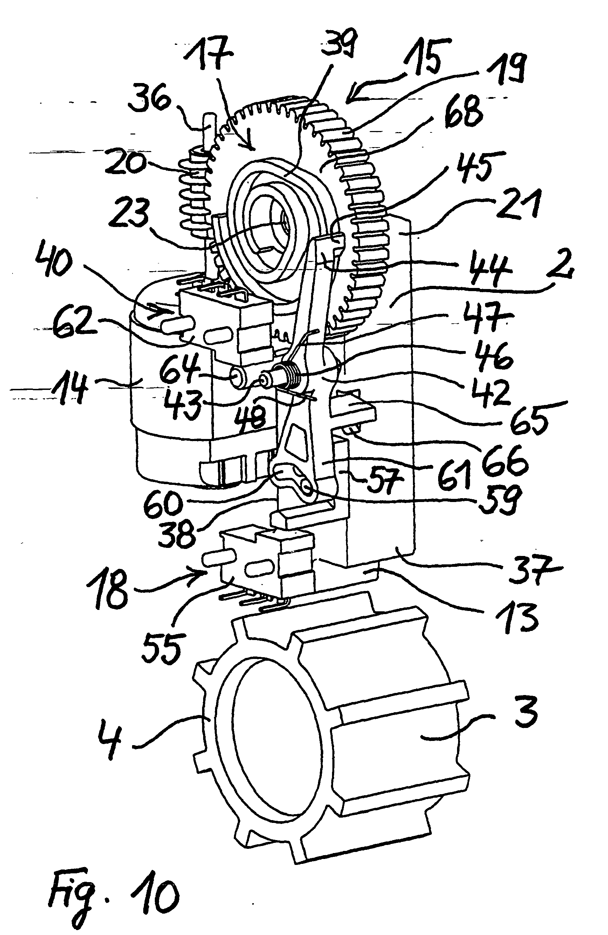

Der Schwenkhebel 42 ist zwischen seiner Schwenkachse 43 und seinem der Spiralrippe 39 des Steuergliedes 15 fernen Ende 61 mit einem weiteren zur Schwenkachse 43 parallelen, plattenförmigen Vorsprung 65 versehen, welcher zur Sicherung des Sperrbolzens 2 in seiner Freigabestellung dient. Wie besonders deutlich aus Fig. 10 hervorgeht, greift dann der Vorsprung 65 des Schwenkhebels 42 in eine seitliche Ausnehmung 66 des Sperrbolzens 2 ein, so daß der Sperrbolzen 2 in der Freigabestellung blockiert ist.

Die geschilderte Vorrichtung zum Sperren der Lenkspindel 1 gegen Drehen funktioniert folgendermaßen.

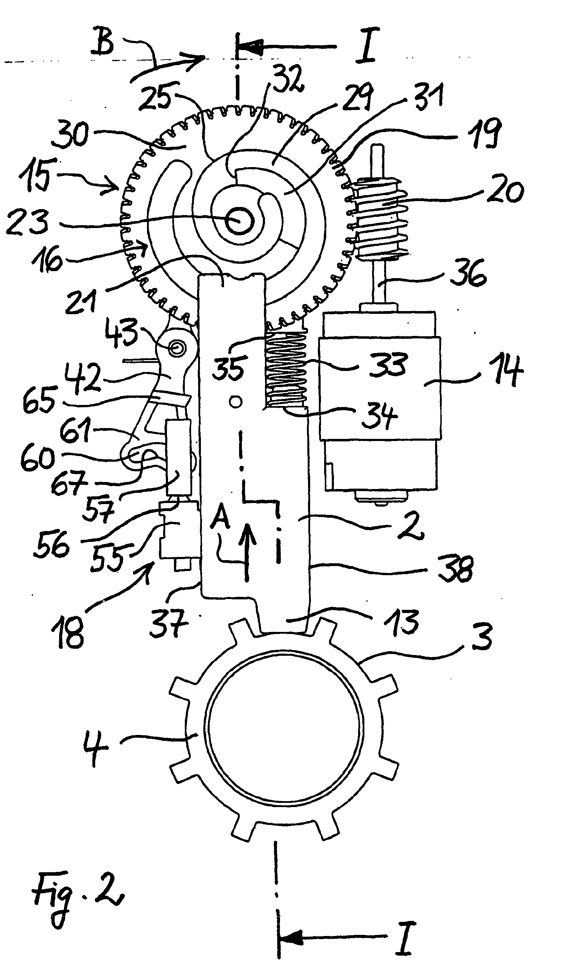

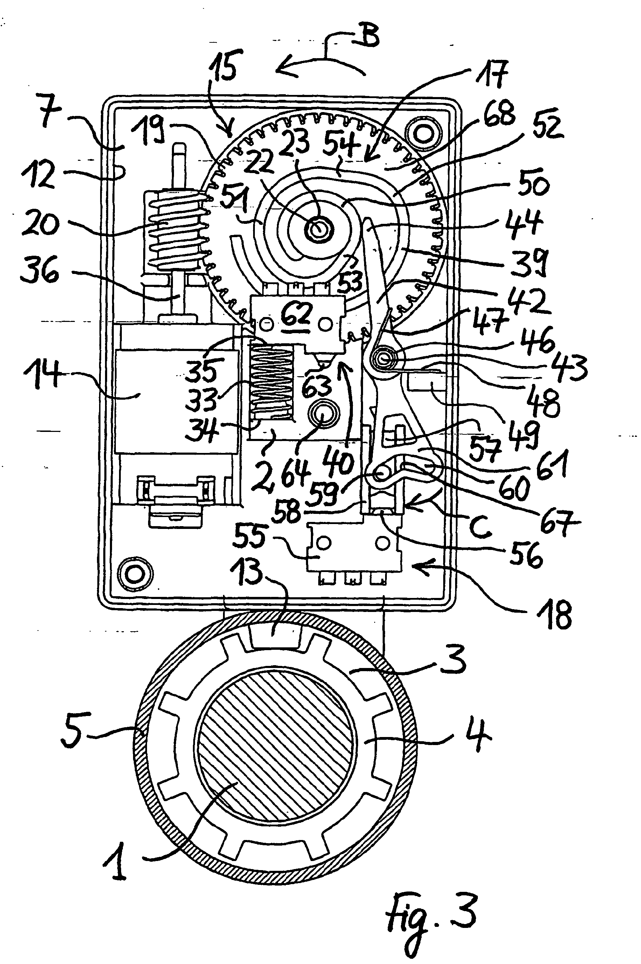

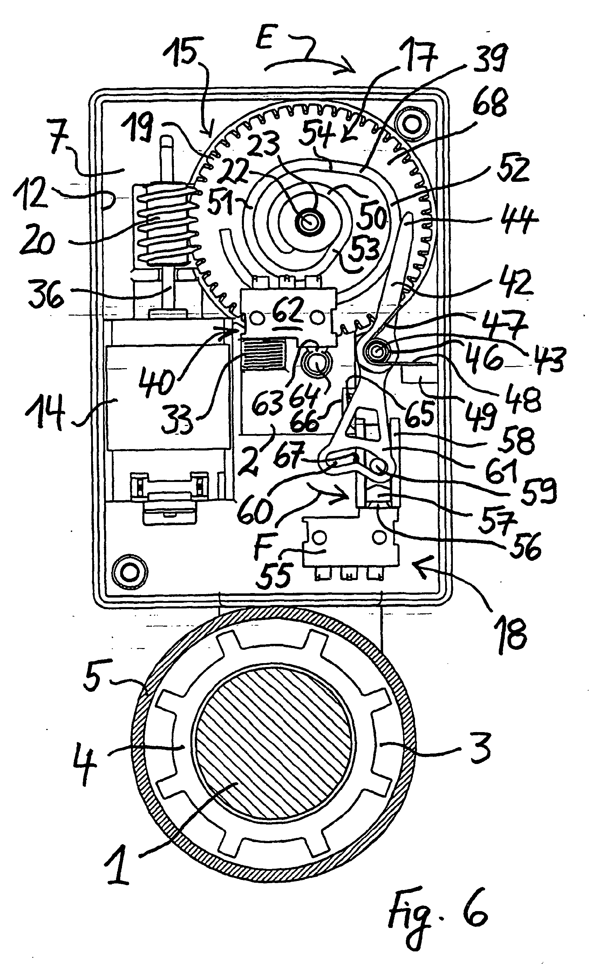

Um den Sperrbolzen 2 axial aus der Sperrstellung gemäß Fig. 1,2,3 in Richtung des Pfeils A (Fig. 2) in die Freigabestellung nach Fig. 4,5,6 zu verschieben, wird der Elektromotor 14 eingeschaltet, so daß seine Ausgangswelle 36 über die Schnecke 20 das Steuerglied 15 in Richtung des Pfeils B (Fig. 2,3) dreht und der Stift 26 des Sperrbolzens 2 sich in der Spiralnut 25 des Steuergliedes 15 immer näher zur Drehachse 22 bzw. Lagerbohrung 23 des Steuergliedes 15 hin bewegt. Dabei verschwenkt die Spiralrippe 39 des Steuergliedes 15 den Schwenkhebel 42 aus der Stellung gemäß Fig.3 in Richtung des Pfeils C in die Stellung nach Fig. 6, und zwar zunächst mit dem inneren geraden Abschnitt 53 aus der Stellung gemäß Fig. 3 in die Mittelstellung, in welcher der Vorsprung 59 des Schiebers 57 sich am mittleren Scheitelpunkt 67 des Querschlitzes 60 des Schwenkhebels 42 befindet, um den elektrischen Tastschalter 55 auszuschalten und danach mit dem äußeren geraden Abschnitt 54 aus der Mittelstellung in die Stellung nach Fig. 6, um den elektrischen Tastschalter 55 wieder einzuschalten und den Vorsprung 65 des Schwenkhebels 42 in die Ausnehmung 66 des Sperrbolzens 2 eintreten zu lassen, so daß der Sperrbolzen 2 in seiner Freigabestellung gesichert ist. Beim Erreichen der Freigabestellung kommt der Sperrbolzen 2 mit seinem Vorsprung 64 am Betätigungselement 63 des weiteren elektrischen Tastschalters 62 zur Anlage und schaltet der Sperrbolzen 2 des Tastschalter 62 ein.

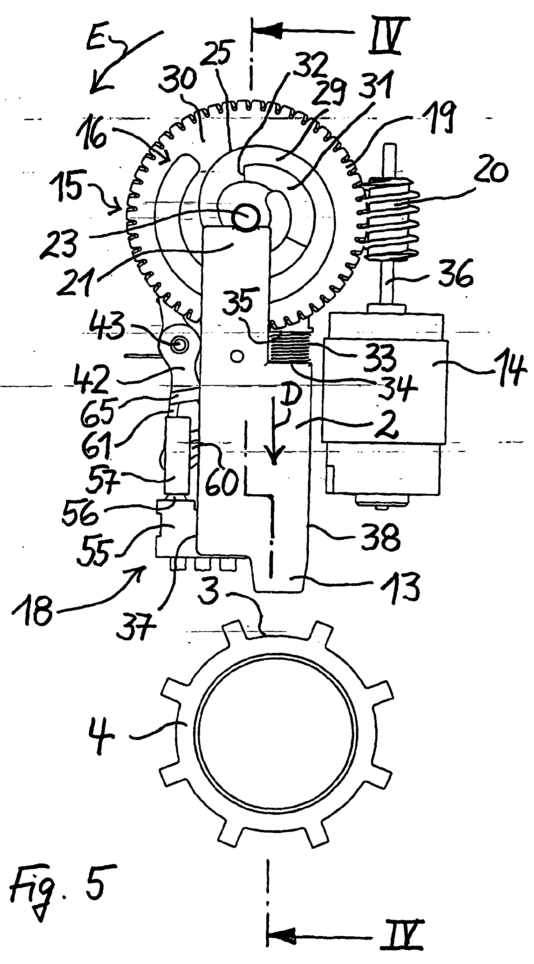

Um den Sperrbolzen 2 axial aus der Freigabestellung gemäß Fig. 4,5,6 in Richtung des Pfeils D (Fig. 5) in die Sperrstellung nach Fig. 1,2,3 zu verschieben, wird der Elektromotor 14 eingeschaltet, so daß seine Ausgangswelle 36 über die Schnecke 20 das Steuerglied 15 in Richtung des Pfeils E (Fig. 5,6) dreht und der Stift 26 des Sperrbolzens 2 sich in der Spiralnut 25 des Steuergliedes 15 immer weiter von der Drehachse 22 bzw. Lagerbohrung 23 des Steuergliedes 15 weg bewegt. Dabei verschwenkt die Spiralrippe 39 des Steuergliedes 15 den Schwenkhebel 42 aus der Stellung gemäß Fig. 6 in Richtung des Pfeils F in die Stellung nach Fig. 3, und zwar zunächst mit dem äußeren geraden Abschnitt 54 aus der Stellung gemäß Fig. 6 in die Mittelstellung, in welcher der Vorsprung 59 des Schiebers 57 sich am mittleren Scheitelpunkt 67 des Querschlitzes 60 des Schwenkhebels 42 befindet, um den Vorsprung 65 des Schwenkhebels 42 aus der Ausnehmung 66 des Sperrbolzens 2 zu entfernen und den Sperrbolzen 2 freizugeben und um den elektrischen Tastschalter 55 auszuschalten, und danach mit dem inneren geraden Abschnitt 53 aus der Mittelstellung in die Stellung nach Fig. 3, um den elektrischen Tastschalter 55 wieder einzuschalten. Wenn der Sperrbolzen 2 die Freigabestellung verläßt und sein Vorsprung 64 das Betätigungselement 63 des weiteren elektrischen Tastschalters 62 freigibt, wird der Tastschalter 62 wieder abgeschaltet.

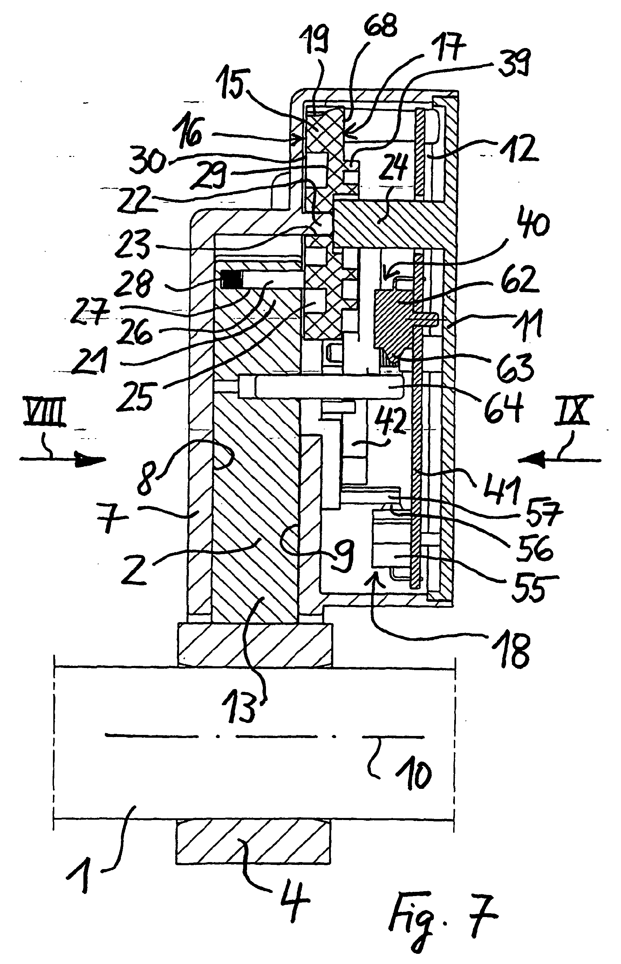

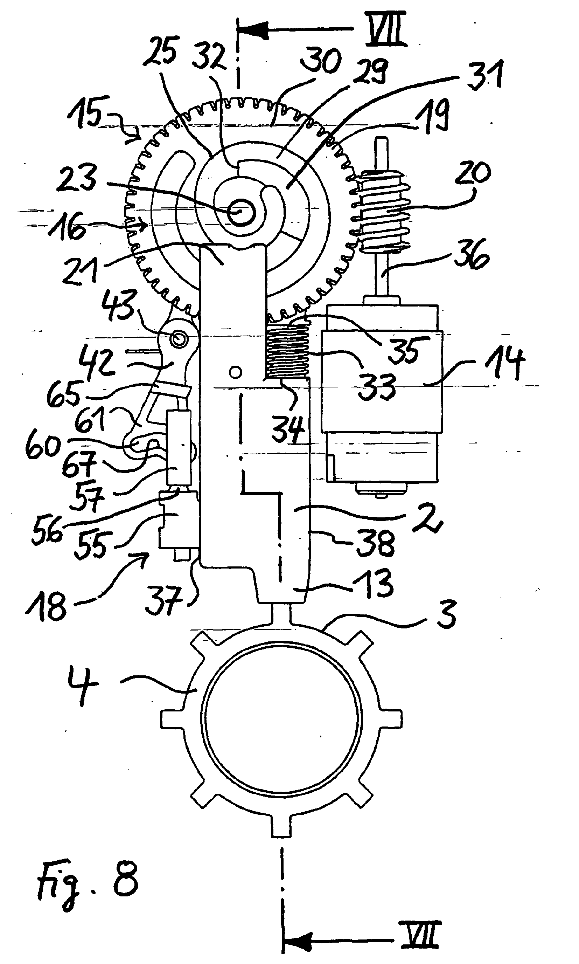

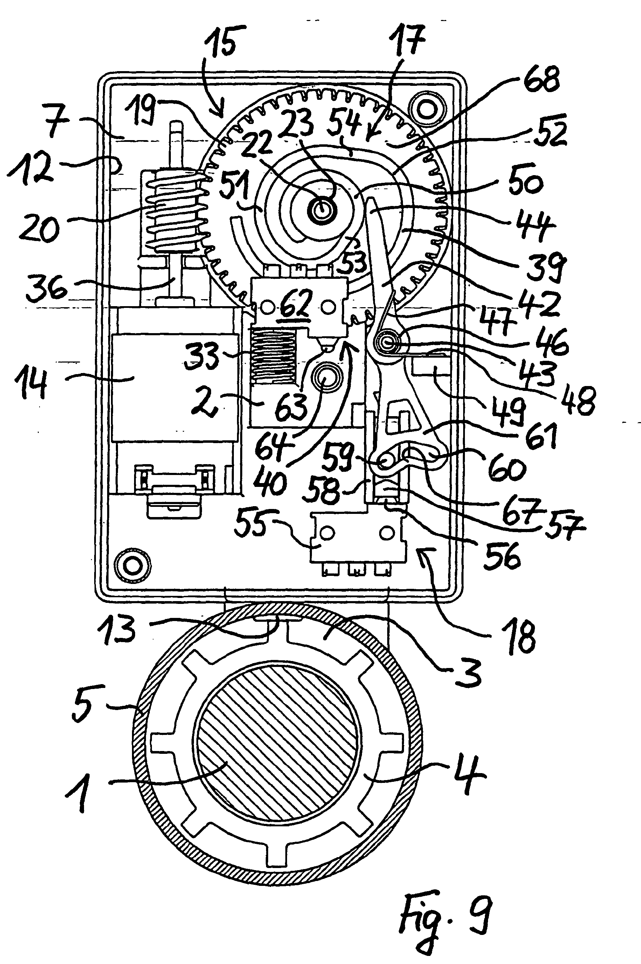

Wenn beim Drehen des Steuergliedes 15 in Richtung des Pfeils E dem einteiligen Sperrbolzen 2 bzw. dem lenkspindeiseitigen Ende 13 desselben keine Sperrausnehmung 3 der Lenkspindel 1 bzw. der Sperrhülse 4 derselben gegenüberliegt, dann kann der Sperrbolzen 2 bzw. das Ende 13 desselben nicht in eine Sperrausnehmung 3 eintreten und der Sperrbolzen 2 nicht in seine Sperrstellung laufen, sondern nur in die Vorsperrstellung nach Fig. 7,8,9. Sobald der Sperrbolzen 2 bei seiner Axialverschiebung in Richtung des Pfeils D diese Vorsperrstellung erreicht, liegt der Stift 26 des Sperrbolzens 2 mit seinem freien Ende an der Stelle 32 des Bodens 29 der Spiralnut 25 des Steuergliedes 15 an. Beim weiteren Drehen des Steuergliedes 15 in Richtung des Pfeils E gleitet der Stift 26 mit seinem freien Ende an der Schrägfläche 31 des Steuergliedes 15 entlang auf die dem Sperrbolzen 2 zugewandte ebene Oberfläche 30 des Steuergliedes 15, um entgegen der Wirkung der Schraubendruckfeder 28 in die Bohrung 27 des Sperrbolzens 2 zurückzulaufen und die Spiralnut 25 des Steuergliedes 15 zu verlassen, so daß das Steuerglied 15 in Richtung des Pfeils E bis in die der Sperrstellung des Sperrbolzens 2 entsprechende Stellung weitergedreht werden kann, wie in Fig. 7,8,9 dargestellt ist.

Aus der Vorsperrstellung nach Fig. 7,8,9 geiangtjder einteilige Sperrbolzen 2 unter der Wirkung seiner Schraubendruckfeder 33 ohne weiteres in die sperrstellung nach Fig. 1 bis 3, wenn die Lenkspindel 1 mit der Sperrhülse 4 aus der Stellung gemäß Fig. 7,8,9 in die Stellung gemäß Fig. 1,2,3 gedreht wird, in welcher eine Sperrausnehmung 3 der Sperrhülse 4 auf das benachbarte Ende 13 des Sperrbolzens 2 ausgerichtet ist. Der Stift 26 des Sperrbolzens 2 gleitet dabei mit seinem freien Ende auf der ebenen Oberfläche 30 des Steuergliedes 15, um schließlich durch seine Schraubendruckfeder 28 wieder aus der Bohrung 27 des Sperrbolzens 2 im Eingriff mit der Spiralnut 25 des Steuergliedes 15 vorgeschoben zu werden.

Die beiden elektrischen Tastschalter 55, 62 werden an eine elektrische oder elektronische Steuerschaltung angeschlossen, mit welcher beispielsweise der Elektromotor 14, eine bei nicht ordnungsgemäßer Bewegung des Sperrbolzens 2 aus der Sperrstellung in die Freigabestellung und/oder bei nicht ordnungsgemäßer Bewegung des Sperrbolzens 2 aus der Freigabestellung in die Sperrstellung wirksam werdende optische und/oder akustische Alarmeinrichtung, die Zündung und/oder der Anlasser des Motors des mit der Vorrichtung zum Sperren der Lenkspindel 1 gegen Drehen versehenen Kraftfahrzeugs etc. gesteuert werden.

Bei der geschilderten Vorrichtung zum Sperren der Lenkspindel 1 gegen Drehen wird die Freigabestellung des Sperrbolzens 2 durch den Drehstellungsdetektor 18 und den weiteren Detektor 40 redundant und somit sicher festgestellt. Der Drehstellungsdetektor 18 und der weitere Detektor 40 bzw. die beiden elektrischen Tastschalter 55, 62 werden sehr schonend betätigt, nämlich genau in der Richtung, in welcher das jeweilige Betätigungselement 56 bzw. 63 beweglich ist, was die Lebensdauer entsprechend erhöht. Die Betätigung des Drehstellungsdetektors 18 bzw. des elektrischen Tastschalters 55 erfolgt mit Hilfe der Spiralrippe 39 bzw. der beiden geraden Abschnitte 53, 54 der Spiralrippe 39, welche jeweils über einen relativ kleinen Drehwinkel des Steuergliedes 15 einen verhältnismäßig großen Verstellweg des Schwenkhebels 42 bewirken uns entsprechend orientiert sind, sehr genau in der jeweiligen Drehstellung des Steuergliedes 15, nämlich innerhalb eines sehr engen Drehstellungsschwankungsbereichs. Die Vorrichtung zeichnet sich durch eine außerordentlich gedrungene Bauweise und entsprechend geringen Platzbedarf aus.

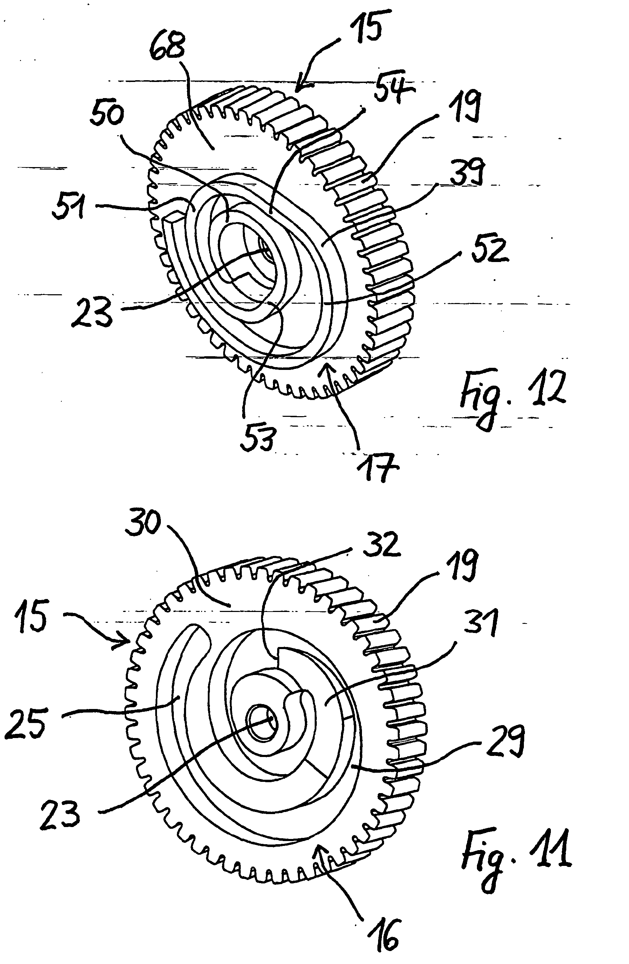

Das besonders deutlich aus Fig. 11, 12 erstchtliche scheibenförmige Steuerglied 15 mit der Umfangsverzahnung 19 und den beiden ebenen, zueinander parallelen Oberflächen 30, 68 beiderseits der Umfangsverzahnung 19, nämlich auf der mit der vertieften Spiralnut 25 versehenen Seite 16 und auf der mit der vorstehenden Spiralrippe 39 versehenen Seite 17 des Steuergliedes 15, ist verhältnismäßig dünn und erlaubt daher eine besonders kompakte und entsprechend wenig Platz beanspruchende Ausbildung der Vorrichtung zum Sperren der Lenkspindel 1 gegen Drehen gemäß Fig. 1 bis 10. Der Abstand der Leiterplatte 41 vom Sperrbolzen 2 kann sehr gering sein und das Gehäuse 7 kann entsprechend schmal gehalten werden.

Darüber hinaus ermöglicht das Steuerglied 15 die Anordnung des Elektromotors 14 neben dem Sperrbolzen 2, so daß seine Ausgangswelle 36 mit der in die Umfangsverzahnung 19 des Steuergliedes 15 eingreifenden Schnecke 20 parallel zum Sperrbolzen 2 verläuft, was im Hinblick auf möglichst geringe Abmessungen des Gehäuses 7 und somit der Vorrichtung zum Sperren der Lenkspindel 1 gegen Drehen gemäß Fig. 1 bis 10 ebenfalls günstig ist.

Abwandlungen von der dargestellten und geschilderten Ausführungsform sind durchaus möglich. So muß das Steuerglied 15 nicht unbedingt mit Hilfe der Schnecke 20 angetrieben werden, sondern kann statt dessen auch ein vom Elektromotor 14 angetriebenes Ritzel in die entsprechend ausgebildete Umfangsverzahnung 19 des Steuergliedes 15 eingreifen. Auch kann das Steuerglied 15 statt der vorstehenden Spiralrippe 39 eine Spiralnut zum Zusammenwirken mit dem Drehstellungsdetektor 18 aufweisen. Der Drehstellungsdetektor 18 und der weitere Detektor 40 können statt aus elektrischen Tastschaltern, insbesondere Mikroschaltern, auch aus Stellschaltern oder berührungslosen Schaltern (Magnetfeldsensoren, insbesondere Hallsensoren, Fotosensoren etc.) bestehen.

## Patentansprüche

1. Vorrichtung zum Sperren der Lenkspindel (1) eines Kraftfahrzeugs gegen Drehen mittels eines mit Sperrausnehmungen (3) der Lenkspindel (1) zusammenwirkenden Sperrbolzens (2), welcher mit Hilfe eines durch einen Elektromotor (14) hin- und herdrehbaren und mit einem Drehstellungsdetektor (18) zusammenwirkenden Steuerglied (15) zwischen einer Sperrstellung und einer Freigabestellung hin- und herschiebbar ist, **dadurch gekennzeichnet, daß** das Steuerglied (15) eine Spiralrippe (39) oder eine Spiralnut aufweist, welche sich um die Drehachse (22) des Steuergliedes (15) windet und mit dem Drehstellungsdetektor (18) zusammenwirkt, um die der Freigabestellung des Sperrbolzens (2) entsprechende Drehstellung des Steuergliedes (15) und die der Sperrstellungdes Sperrbolzens (2) entsprechende Drehstellung des Steuergliedes (15) festzustellen, und daß ein weiterer Detektor (40) vorgesehen ist, mit welchem der Sperrbolzen (2) zusammenwirkt, um die Freigabestellung des Sperrbolzens (2) festzustellen.

2. Vorrichtung nach Anspruch 1, **dadurch gekennzeichnet, daß** die Spiralrippe (39) oder Spiralnut des Steuergliedes (15) sich über einen Steuerglied-Drehwinkel von mindestens 360° erstreckt.

3. Vorrichtung nach Anspruch 1 oder 2, **dadurch gekennzeichnet, daß** die Spiralrippe (39) oder Spiralnut des Steuergliedes (15) über einen zweiarmigen Schwenkhebel (42) mit dem Drehstellungsdetektor (18) zusammenwirkt, dessen Schwenkachse (43) parallel zur Drehachse (22) des Steuergliedes (15) verläuft.

4. Vorrichtung nach Anspruch 3 in Verbindung mit Anspruch 2, **dadurch gekennzeichnet, daß** die Spiralrippe (39) oder Spiralnut des Steuergliedes (15) drei kreisbogenförmige, zur Drehachse (22) des Steuergliedes (15) konzentrische Abschnitte (50,51,52) mit unterschiedlichen Krümmungsradien und zwei im wesentlichen gerade Abschnitte (53,54) zum Verschwenken des Schwenkhebels (42) aufweist, welche jeweils den kreisbogenförmigen Abschnitt (50) mit dem kleinsten Krümmungsradius und den kreisbogenförmigen Abschnitt (51) mit dem mittleren Krümmungsradius bzw. den kreisbogenförmigen Abschnitt (51) mit dem mittleren Krümmungsradius und den kreisbogenförmigen Abschnitt (52) mit dem größten Krümmungsradius miteinander verbinden.

5. Vorrichtung nach Anspruch 3 oder 4, **dadurch gekennzeichnet, daß** der Drehstellungsdetektor (18) von einem elektrischen Tastschalter (55) gebildet ist, mit dessen Betätigungselement (56) der Schwenkhebel (42) über einen Schieber (57) zusammenwirkt, welcher in derselben Richtung wie das Betätigungselement (56) des Tastschalters (55) beweglich ist.

6. Vorrichtung nach Anspruch 5, **dadurch gekennzeichnet, daß** der Schieber (57) einen zur Schwenkachse (43) des Schwenkhebels (42) parallelen zylindrischen Vorsprung (59) aufweist, welcher in einen Querschlitz (60) an dem der Spiralrippe (39) oder Spiralnut des Steuergliedes (15) fernen Ende (61) des Schwenkhebels (42) eingreift.

7. Vorrichtung nach Anspruch 3, 4, 5 oder 6, **dadurch gekennzeichnet, daß** der Schwenkhebel (42) an seinem dem Steuerglied (15) benachbarten Ende (44) einen zu seiner Schwenkachse (43) parallelen Vorsprung (45) aufweist, mit welchem die Spiralrippe (39) oder Spiralnut des Steuergliedes (15) zusammenwirkt.

8. Vorrichtung nach Anspruch 7, **dadurch gekennzeichnet, daß** der Schwenkhebel (42) zur Anlage des Vorsprungs (45) an der Spiralrippe (39) des Steuergliedes (15) federbelastet ist.

9. Vorrichtung nach einem der Ansprüche 3 bis 8, **dadurch gekennzeichnet, daß** der Schwenkhebel (42) mit einem zu seiner Schwenkachse (43) parallelen Vorsprung_(65) versehen ist, welcher zur Sicherung des radial zur Drebachse (22) des Steuergliedes (15) hin und herschlebbaren Sperrbolzens (2) in seiner Freigabestellung in eine seitliche Ausnehmung (66) des Sperrbolzens (2) eingreift.

10. Vorrichtung nach einem der vorstehenden Ansprüche, **dadurch gekennzeichnet, daß** der weitere Detektor (40) von einem elektrischen Tastschalter (62) gebildet ist, mit dessen Betätigungselement (63), welches in derselben Richtung wie der Sperrbolzen (2) beweglich ist, ein seitlicher Vorsprung (64) des Sperrbolzens (2) zusammenwirkt.

11. Vorrichtung nach einem der vorstehenden Ansprüche, **dadurch gekennzeichnet, daß** das Steuerglied (15) als kreisrunde Scheibe mit einer Umfangsverzahnung (19) für den Eingriff einer vom Elektromotor (14) angetriebenen Schnecke (20) oder eines vom Elektromotor (14) angetriebenen Ritzels ausgebildet ist.

12. Vorrichtung nach Anspruch 11, **dadurch gekennzeichnet, daß** die Spiralrippe (39) oder Spiralnut des Steuergliedes (15) auf der dem Sperrbolzen (2) abgewandten Seite (17) des Steuergliedes (15) angeordnet ist, wobei der Sperrbolzen (2) radial zur Drehachse (22) des Steuergliedes (15) hin- und herschiebbar ist.

13. Vorrichtung nach Anspruch 12, **dadurch gekennzeichnet, daß** das Steuerglied (15) zwischen dem Sperrbolzen (2) und einer Leiterplatte (41) angeordnet ist, an welcher der Drehstellungsdetektor (18) und der weitere Detektor (40) angebracht sind.

## Claims

1. Device for locking the steering spindle (1) of a motor vehicle against rotation by means of a locking bolt (2), which cooperates with locking recesses (3) of the steering spindle (1) and which is displaceable to and fro between a locking position and a release position by means of a control member (15), which is rotatable to and fro by an electric motor (14) and cooperates with a rotational-position detector (18),
**characterised in that**
the control member (15) has a spiral rib (39) or a spiral groove, which winds around the axis of rotation (22) of the control member (15) and cooperates with the rotational-position detector (18) to sense the rotational position of the control member (15) corresponding to the release position of the locking bolt (2) and the rotational position of the control member (15) corresponding to the locking position of the locking bolt (2); and that a further detector (40) is provided, with which the locking bolt (2) cooperates in order to sense the release position of the locking bolt (2).

2. Device according to claim 1,
**characterised in that**
the spiral rib (39) or spiral groove of the control member (15) extends over a rotational angle of the control-member of at least 360°.

3. Device according to claim 1 or 2,
**characterised in that**
the spiral rib (39) or spiral groove of the control member (15) cooperates with the rotational-position detector (18) via a two-armed pivot lever (42), the pivot axis (43) of which extends parallel to the axis of rotation (22) of the control member (15).

4. Device according to claim 3 in combination with claim 2,
**characterised in that**
the spiral rib (39) or spiral groove of the control member (15) has three circular-segment portions (50, 51, 52), extending concentrically with the axis of rotation (22) of the control member (15), and having different radii of curvature, and two substantially straight portions (53, 54) for pivoting the pivot lever (42), which connect to each other the circular-segment portion (50) having the shortest radius of curvature and the circular-segment portion (51) having the middle-sized radius of curvature, and connect to each other the circular-segment portion (51) having the middle-sized radius of curvature and the circular-segment portion (52) having the longest radius of curvature.

5. Device according to claim 3 or 4,
**characterised in that**
the rotational-position detector (18) is an electrical resetting switch (55) having an actuation element (56), with which the pivot lever (42) cooperates via a slide (57), which is movable in the same direction as the actuation element (56) of the resetting switch (55).

6. Device according to claim 5,
**characterised in that**
the slide (57) has a cylindrical protrusion (59), which extends parallel to the pivot axis (43) of the pivot lever (42) and which engages a transverse slot (60) on the end (61) of the pivot lever (42) remote from the spiral rib (39) or spiral groove of the control member (15).

7. Device according to claim 3, 4, 5 or 6,
**characterised in that**
the pivot lever (42) has a protrusion (45) on its end (44) adjacent to the control member (15), which extends parallel to its pivot axis (43) and with which the spiral rib (39) or spiral groove of the control member (15) cooperates.

8. Device according to claim 7,
**characterised in that**
the pivot lever (42) is spring-biased to urge the protrusion (45) to contact the spiral rib (39) of the control member (15).

9. Device according to any one of claims 3 to 8,
**characterised in that**
the pivot lever (42) is provided with a protrusion (65), which extends parallel to its pivot axis (43) and which engages a lateral recess (66) in the locking bolt (2) in order to secure the locking bolt (2) in its release position, the bolt (2) being movable radially to and fro relative to the axis of rotation (22) of the control member (15).

10. Device according to any one of the above claims,
**characterised in that**
the further detector (40) is formed by an electrical resetting switch (62) having an actuation element (63), which is movable in the same direction as the locking bolt (2) and with which a lateral protrusion (64) of the locking bolt (2) cooperates.

11. Device according to any one of the above claims,
**characterised in that**
the control member (15) is configured as a circular disc with peripheral teeth (19) engaged by a worm (20) driven by the electric motor (14), or by a pinion driven by the electric motor (14).

12. Device according to claim 11,
**characterised in that**
the spiral rib (39) or spiral groove of the control member (15) is disposed on the side (17) of the control member (15) facing away from the locking bolt (2), which is movable radially to and fro relative to the axis of rotation (22) of the control member (15).

13. Device according to claim 12,
**characterised in that**
the control member (15) is disposed between the locking bolt (2) and a printed-circuit board (41), on which the rotational-position detector (18) and the further detector (40) are mounted.

## Revendications

1. Dispositif pour le blocage en rotation de l'arbre de direction (1) d'un véhicule automobile au moyen d'un boulon de blocage (2) coopérant avec des évidements de blocage (3) de l'arbre de direction (1), ledit boulon de blocage pouvant aller et venir par coulissement entre une position de blocage et une position de déblocage au moyen d'un élément de commande (15) pouvant être tourné et retourné par un moteur électrique (14) et coopérant avec un détecteur de position de rotation (18), **caractérisé en ce que** l'élément de commande (15) présente une nervure en spirale (39) ou une rainure en spirale s'enroulant autour de l'axe de rotation (22) de l'élément de commande (15) et coopérant avec le détecteur de position de rotation (18) pour déterminer la position de rotation de l'élément de commande (15) correspondant à la position de déblocage du boulon de blocage (2) et la position de rotation de l'élément de commande (15) correspondant à la position de blocage du boulon de blocage (2), et **en ce qu'**un autre détecteur (40) est prévu, avec lequel coopère le boulon de blocage (2), pour déterminer la position de déblocage du boulon de blocage (2).

2. Dispositif selon la revendication 1, **caractérisé en ce que** la nervure en spirale (39) ou la rainure en spirale de l'élément de commande (15) s'étend sur un angle de rotation de l'élément de commande de 360 ° au moins.

3. Dispositif selon la revendication 1 ou 2, **caractérisé en ce que** la nervure en spirale (39) ou la rainure en spirale de l'élément de commande (15) coopère avec le détecteur de position de rotation (18) au moyen d'un levier oscillant (42) à deux bras dont l'axe d'oscillation (43) s'étend parallèlement à l'axe de rotation (22) de l'élément de commande (15).

4. Dispositif selon la revendication 3 associée à la revendication 2, **caractérisé en ce que** la nervure en spirale (39) ou la rainure en spirale de l'élément de commande (15) présente trois segments (50, 51, 52) en are de cercle, concentriques à l'axe de rotation (22) de l'élément de commande (15), avec différents rayons de courbure, et deux segments essentiellement droits (53, 54) pour l'oscillation du levier oscillant (42), lesquels relient respectivement entre eux le segment en arc de cercle (50) avec le plus petit rayon de courbure au segment en arc de cercle (51) avec le rayon de courbure intermédiaire, et le segment en arc de cercle (51) avec le rayon de courbure intermédiaire au segment en arc de cercle (52) avec le plus grand rayon de courbure

5. Dispositif selon la revendication 3 ou 4, **caractérisé en ce que** le détecteur de position de rotation (18) est formé par un interrupteur électrique à rappel automatique (55), avec l'élément de manoeuvre (56) duquel le levier oscillant (42) coopère au moyen d'un coulisseau (57) mobile dans la même direction que l'élément de manoeuvre (56) de l' interrupteur électrique à rappel automatique (55).

6. Dispositif selon la revendication 5, **caractérisé en ce que** le coulisseau (57) présente une saillie cylindrique (59) parallèle à l'axe d'oscillation (43) du levier oscillant (42), laquelle s'engage dans une fente transversale (60) sur l'extrémité (61) du levier oscillant (42) distante de la nervure en spirale (39) ou de la rainure en spirale de l'élément de commande (15).

7. Dispositif selon la revendication 3, 4, 5 ou 6, **caractérisé en ce que** le levier oscillant (42) présente sur son extrémité (44) contiguë à l'élément de commande (15) une saillie (45) parallèle à son axe d'oscillation (43), avec laquelle coopère la nervure en spirale (39) ou la rainure en spirale de l'élément de commande (15).

8. Dispositif selon la revendication 7, **caractérisé en ce que** le levier oscillant (42) est soumis à l'action d'un ressort pour l'application de la saillie (45) contre la nervure en spirale (39) de l'élément de commande (15).

9. Dispositif selon l'une des revendications 3 à 8, **caractérisé en ce que** le levier oscillant (42) est muni d'une saillie (65) parallèle à son axe d'oscillation (43), laquelle s'engage dans un évidement latéral (66) du boulon de blocage (2) pour la fixation du boulon de blocage (2) pouvant aller et venir par coulissement radialement à l'axe de rotation (22) de l'élément de commande (15) dans sa position de déblocage.

10. Dispositif selon l'une des revendications précédentes, **caractérisé en ce que** l'autre détecteur (40) est formé par un interrupteur électrique à rappel automatique (62), avec l'élément de manoeuvre (63) duquel, mobile dans la même direction que le boulon de blocage (2), coopère une saillie latérale (64) du boulon de blocage (2).

11. Dispositif selon l'une des revendications précédentes, **caractérisé en ce que** l'élément de commande (15) est formé comme rondelle circulaire avec une denture circonférentielle (19) pour l'engrènement d'une vis sans fin (20) entraînée par le moteur électrique (14) ou d'un pignon entraîné par le moteur électrique (14).

12. Dispositif selon la revendication 11, **caractérisé en ce que** la nervure en spirdale (39) ou la rainure en spirale de l'élément de commande (15) est disposée sur la face (17) de l'élément de commande (15) éloignée du boulon de blocage (2), le boulon de blocage (2) pouvant aller et venir par coulissement radialement à l'axe de rotation (22) de l'élément de commande (15).

13. Dispositif selon la revendication 12, **caractérisé en ce que** l'élément de commande (15) est disposé entre le boulon de blocage (2) et une plaque de circuits (41), à laquelle sont attachés le détecteur de position de rotation (18) ainsi que l'autre détecteur (40).
